# DEMANDE DE BREVET EUROPEEN

(11) **EP 1 484 936 A2**
(43) Date de publication de la demande: **08.12.2004**
(21) Numéro de dépôt: 04076643.8
(22) Date de dépôt: 04.06.2004
(51) Int. Cl.: H04Q 7/38

(54) **Procédé de transmission de données dans un système de télécommunication à réseaux multiples**

(30) Priorité: 05.06.2003 FR 0306857
(71) Demandeur: SAGEM S.A., 75015 Paris (FR)
(72) Inventeur: de Graeve, Frédéric, 75017 Paris (FR); Dorion-Cousinat, Marc, 69009 Lyon (FR)
(74) Mandataire: Saint-Marc, Christophe Andréas

(57) **Abrégé**

L'invention concerne un procédé de transmission de données dans un système de télécommunication SYST incluant un premier réseau public 8 à 31, et un deuxième réseau privé 14, 16 et 25.

Le procédé selon l'invention inclut une étape de diffusion d'au moins un message d'information SIj compatible avec le premier réseau et destiné à informer tout terminal bi-mode TR recevant ledit message SIj qu'un accès au deuxième réseau lui est possible, d'une part, et à permettre à ce terminal bi-mode TR d'identifier des stations de base voisines appartenant au deuxième réseau, d'autre part.

Chaque terminal bi-mode TR sera ainsi incité à se connecter ou à rester connecté à un réseau privé, et pourra accomplir des tâches usuellement dévolues à une infrastructure de gestion des systèmes à réseaux multiples connus.

## Description

### DOMAINE TECHNIQUE DE L'INVENTION

La présente invention concerne un procédé de transmission de données dans un système de télécommunication incluant :
. un premier réseau de communication cellulaire comprenant une pluralité de stations de base d'un premier type,
. un deuxième réseau de communication cellulaire comprenant une autre pluralité de stations de base d'un deuxième type, lesquels premier et deuxième types sont différentiables par des caractéristiques physiques non communes d'un type à l'autre, et
. au moins un terminal, dit bi-mode, apte à communiquer avec des stations de base du premier type et des stations de base du deuxième type.

### ARRIERE-PLAN TECHNOLOGIQUE DE L'INVENTION

Un tel système de télécommunication est connu de la demande de brevet internationale WO 00/35230, publiée le 15 juin 2000.

Le système de télécommunication connu décrit dans ce document inclut un premier réseau de communication public incluant un premier groupe de stations de base et un deuxième réseau de communication privé incluant un deuxième groupe de stations de base. Dans ce système connu, les stations de base du premier groupe sont distinctes des stations de base du deuxième groupe, et ont vocation à être contrôlées par des infrastructures de contrôle également distinctes. Dans le système connu, un terminal bi-mode est apte à communiquer avec chacun des premier et deuxième réseaux de communication, mais sera de préférence relié au deuxième réseau de communication dès lors qu'une telle liaison sera rendue possible par la localisation géographique dudit terminal bi-mode, c'est-à-dire en principe lorsque ledit terminal se trouvera à l'intérieur d'une zone géographique desservie par l'une des stations de base du deuxième réseau de communication.

### DESCRIPTION GENERALE DE L'INVENTION

L'invention est liée aux considérations suivantes, qui résultent d'une analyse menée par les inventeurs de l'arrière-plan technologique décrit ci-dessus.

L'ordre de préférence selon lequel un terminal bi-mode sera relié au deuxième réseau de communication, dès lors qu'une telle liaison sera rendue possible, est en principe lié au fait que le deuxième réseau de communication présente des propriétés différentes de celles du premier réseau de communication, ce qui permet d'exclure un accès audit deuxième réseau par des terminaux conçus pour communiquer avec le seul premier réseau de communication, avec pour conséquence une certaine confidentialité des informations échangées au moyen du deuxième réseau de communication. Le deuxième réseau de communication pourra ainsi par exemple appartenir à une unique entreprise ou appartenir en copropriété à un groupement d'entreprises, dont seuls les employés disposeront de terminaux aptes à communiquer avec les stations de base du deuxième type. Les caractéristiques physiques différenciant les stations de base du deuxième type par rapport aux stations de base du premier type pourront par exemple résider dans une utilisation d'une bande de fréquences différente d'un type à l'autre, ou encore dans des fonctionnalités de cryptage ou de décryptage des informations que les stations de base du deuxième type seront amenées à émettre ou recevoir, respectivement.

Dans le système de télécommunication connu, l'infrastructure du deuxième réseau de communication est destinée à identifier chaque terminal susceptible de se voir relié audit deuxième réseau, et à envoyer de façon ciblée à un tel terminal des messages de commande aptes à inciter ce terminal à se déconnecter d'une station de base du premier type à laquelle il était relié jusqu'alors et à se connecter à une station de base du deuxième type dont l'identité aura préalablement été déterminée par ladite infrastructure. Un suivi de ce terminal sera ensuite assuré par l'infrastructure du deuxième réseau, qui identifiera et indiquera audit terminal d'autres stations de base du deuxième type auxquelles ledit terminal devra se connecter de préférence s'il est amené à quitter la zone géographique desservie par la station de base du deuxième type à laquelle il sera alors connecté.

Il apparaît ainsi que, pour remplir les fonctions qui lui sont dévolues selon l'analyse ci-dessus, l'infrastructure du deuxième réseau doit être munie de ressources considérables pour assurer une surveillance en temps réel de la position géographique de chaque terminal bi-mode, d'une part, pour assurer une surveillance des liaisons que ce terminal bi-mode pourrait établir avec des stations de base du deuxième type environnant ce terminal, d'autre part, et pour générer des signaux de contrôle dédiés à chaque terminal, et destinés à amener ce terminal à établir ou maintenir une liaison avec une station de base choisie par ladite infrastructure du deuxième réseau.

Un problème de même nature apparaît de façon plus sensible encore dans des applications où les stations de base des premier et deuxième types sont destinées à être gérées par une même infrastructure appartenant par exemple à un unique opérateur de télécommunications, applications qui ne sont pas envisagées dans le document cité plus haut. Dans un cas particulier d'une telle application, un opérateur d'un réseau de communication public de type GSM (abréviation connue de l'homme du métier de l'appellation anglaise "Global System for Mobile communications) constitué par des stations de base d'un premier type conformes au protocole GSM pourra souhaiter munir certaines de ces stations de base de fonctionnalités supplémentaires afin de les rendre aptes à émettre et à recevoir des signaux conformes à un autre standard de télécommunication, en plus des signaux conformes au protocole GSM que ces stations de base étaient initialement destinées à émettre ou à recevoir. Des stations de base munies de telles fonctionnalités supplémentaires constitueront alors des stations de base d'un deuxième type et seront en quelque sorte des stations de base bi-mode, mais devront être gérées par l'infrastructure qui est la leur dans le réseau GSM d'origine. Cette infrastructure devra cependant subir des modifications pour rendre possible une exploitation optimale du deuxième réseau de communication formé par ces stations de base du deuxième type. Pour des raisons économiques et pratiques, ces modifications devront être aussi peu importantes que possible, de sorte qu'une mise en oeuvre des ressources qui sont prévues dans le système de télécommunication connu pour surveiller en temps réel chaque terminal bi-mode et pour générer de façon spécifique des signaux de contrôle dédiés à ce terminal n'est pas envisageable dans un système de télécommunication incluant des premier et deuxième réseaux de communication destinés à être gérés par une infrastructure unique.

L'un des buts de l'invention est de réduire de manière significative les ressources nécessaires à une gestion efficace d'un système de télécommunication incluant de multiples réseaux de communication en dispensant dans une large mesure la ou les infrastructures de tels réseaux de tâches de gestion individualisée de chaque terminal multi-mode inclus dans ce système de télécommunication.

En effet, un procédé de transmission conforme au paragraphe introductif est caractérisé selon l'invention en ce qu'il inclut une étape de diffusion, par au moins une station de base du deuxième type, d'au moins un premier message d'information destiné à tous les terminaux bi-modes présents dans une zone géographique desservie par ladite station de base, lequel premier message d'information étant compatible avec un protocole de communication dédié au premier réseau et étant destiné à informer chacun de ces terminaux bi-modes qu'un accès au deuxième réseau de communication leur est possible, d'une part, et à permettre à chacun desdits terminaux bi-modes d'identifier d'autres stations de base du deuxième type, voisines de la station de base ayant émis le premier message d'information, d'autre part.

Conformément à l'invention, l'étape de diffusion est exécutée de façon systématique par une station de base du deuxième type, de sorte que cette station de base n'a pas besoin d'identifier un ou plusieurs terminaux bi-modes en tant que destinataires spécifiques du message d'information diffusé par ladite station de base. Parmi différents terminaux qui recevront ce message d'information, seuls les terminaux bi-modes seront aptes à en extraire des informations utiles, ce qui permet de transférer sur les terminaux eux-mêmes une grande partie des tâches dévolues à l'infrastructure dans le système connu du document cité plus haut.

Le premier message d'information pourra être généré selon diverses manières et revêtir un grand nombre de formes différentes, pourvu qu'il soit conforme au protocole de communication dédié au réseau du premier type et intelligible uniquement pour les terminaux bi-modes. Dans une application où le premier réseau de communication est un réseau GSM, le premier message d'information pourra être véhiculé par un signal porté par un canal dit de diffusion d'informations de contrôle BCCH (abréviation de l'appellation anglaise "Broadcast Control CHannel", connue de l'homme du métier de la norme ETSI 04.08), et sera de préférence constitué par une partie prédéterminée d'un message de type SI1 (abréviation de l'appellation anglaise "System Information type 1", connue de l'homme du métier de la norme ETSI 04.08). En effet, la norme GSM n'impose pas à un terminal compatible avec cette seule norme de surveiller et d'interpréter toutes les parties constitutives de messages de type SI1, bien que cette norme GSM prévoie l'existence de ces messages. Il suffira donc de munir les terminaux bi-modes de fonctionnalités les rendant aptes à surveiller et à interpréter de telles parties prédéterminées desdits messages de type SI1 pour que lesdits terminaux bi-modes puissent recevoir des informations relatives au deuxième réseau de communication tout en étant reliés au premier réseau de communication, ces messages d'information ne causant en outre aucune perturbation dans le fonctionnement du réseau du premier type puisqu'ils sont compatibles avec celui-ci.

Selon une première variante de l'invention, le premier message d'information inclut une liste de stations de base du deuxième type, voisines de la station de base ayant émis le premier message d'information.

Dans une telle première variante de l'invention, la seule lecture d'un premier message d'information par un terminal bi-mode suffira à indiquer audit terminal les stations de base du deuxième type auxquelles il devra se connecter de préférence, puisque ledit premier message d'information contiendra par lui-même des identifiants et/ou des valeurs de fréquence propres auxdites stations de base. Le premier message d'information pourra en outre inclure une liste de stations de base du premier type auxquelles un tel terminal bi-mode pourra être amené à se connecter dans des cas où aucune connexion n'est possible avec les stations de base du deuxième type indiquées dans la liste incluse dans le premier message d'information.

De telles listes de stations de base peuvent constituer un volume de données considérable, au point qu'il pourra être préférable de libérer le vecteur d'information constitué par le premier message d'information d'une telle charge, et de laisser ainsi ce vecteur apte à transmettre d'autres données.

Dans une deuxième variante de l'invention, le premier message d'information inclut un champ présentant un contenu de nature à indiquer à chaque terminal bi-mode qu'un deuxième message d'information est émis par la station de base ayant émis le premier message d'information, lequel deuxième message d'information incluant une liste de stations de base du deuxième type voisines de ladite station de base ayant émis le premier message d'information.

Une telle deuxième variante de l'invention permet de soulager le vecteur d'information constitué par le premier message d'information de la charge représentée par les listes de stations voisines, en prévoyant de diffuser ces listes au moyen d'un deuxième vecteur d'information constitué par le deuxième message d'information, qui pourra être par exemple être formé par un message de type SI2 (abréviation de l'appellation anglaise "System Information type 2", connue de l'homme du métier de la norme ETSI 04.08) dans des applications où le premier réseau de communication est un réseau de type GSM. Le premier message d'information ne devra contenir qu'un drapeau dont la valeur indiquera, le cas échéant, à un terminal bi-mode qui aura reçu ce premier message d'information que ledit terminal doit examiner le contenu du deuxième message d'information pour en extraire la liste des stations de base voisines auxquelles il devra de préférence se connecter. De tels messages d'information pourront en outre également être diffusés par des stations de base du premier type afin d'inciter des terminaux bi-modes connectés au premier réseau de communication à se connecter au deuxième réseau de communication. Le deuxième message d'information pourra par ailleurs ne contenir que des listes de stations de base du deuxième type, auquel cas des listes de stations de base voisines du premier type seront reçues par les terminaux bi-modes selon une procédure définie dans le protocole de communication dédié au réseau du premier type.

Selon un mode de mise en oeuvre particulier de l'invention, chaque terminal bi-mode étant destiné à produire des mesures de puissance de signaux émis par des stations de base voisines d'une station de base dite courante avec laquelle ledit terminal bi-mode est en communication à chaque instant, ledit procédé inclut une étape de majoration des valeurs de puissance relatives à au moins un signal reçu depuis au moins l'une des stations de base du deuxième type voisines préalablement identifiées par ledit terminal bi-mode.

Dans un tel mode de mise en oeuvre de l'invention, les valeurs de puissance mesurées par un terminal bi-mode détermineront un classement par ordre de priorité qui sera attribué aux stations de base voisines pour une éventuelle connexion, que lesdites stations voisines soient du premier ou du deuxième type. La majoration des mesures relatives aux puissances des signaux reçus depuis les seules stations de base du deuxième type permettra de faire artificiellement remonter dans ce classement les stations de base du deuxième type par rapport aux stations de base du premier type, et donc d'encourager un terminal bi-mode à se connecter ou à rester connecté au deuxième réseau de communication. La majoration prévue selon ce mode de mise en oeuvre de l'invention pourra être réalisée en ajoutant une même valeur prédéterminée à toutes les valeurs de puissances mesurées pour toutes les stations de base du deuxième type voisines, ou en ajoutant à chaque valeur de puissance mesurée pour chaque station de base du deuxième type voisine une valeur relative dépendant de ladite valeur de puissance mesurée, par exemple 25, 50 ou encore 100% de ladite valeur mesurée.

Chaque terminal bi-mode pourra scruter en permanence le contenu de premiers messages d'information lui parvenant depuis des stations de base du deuxième type, mais une telle scrutation permanente nécessitera une consommation de puissance continue qui risque d'épuiser prématurément une source d'énergie prévue pour alimenter ledit terminal laquelle source d'énergie n'est pas infinie en tant qu'usuellement constituée par une batterie.

Selon une troisième variante de l'invention, un procédé de transmission tel que décrit plus haut inclura en outre avantageusement une étape de diffusion d'un troisième message d'information par une station de base du deuxième type destinée à diffuser un premier message d'information, lequel troisième message d'information incluant un champ présentant un contenu de nature à indiquer à chaque terminal bi-mode ayant reçu ledit troisième message d'information si ledit terminal doit ou non tenir compte du premier message d'information.

Le troisième message d'information permettra une activation ou une désactivation à distance des ressources dont dispose chaque terminal bi-mode pour scruter le contenu de premiers messages d'information lui parvenant depuis des stations de base du deuxième type, et donc de réduire la consommation d'énergie liée à la mise en oeuvre effective de ces ressources.

L'invention concerne également, selon un premier aspect matériel, un système de télécommunication incluant :
. un premier réseau de communication cellulaire comprenant une pluralité de stations de base d'un premier type,
. un deuxième réseau de communication cellulaire comprenant une autre pluralité de stations de base d'un deuxième type, lesquels premier et deuxième types sont différentiables par des caractéristiques physiques non communes d'un type à l'autre, et
. au moins un terminal, dit bi-mode, apte à communiquer avec des stations de base du premier type et des stations de base du deuxième type,
système dans lequel au moins une station de base du deuxième type inclut des moyens de diffusion d'au moins un premier message d'information destiné à tous les terminaux bi-modes présents dans une zone géographique desservie par ladite station de base, lequel premier message d'information étant compatible avec un protocole de communication dédié au premier réseau et étant destiné à informer chacun de ces terminaux bi-modes qu'un accès au deuxième réseau de communication leur est possible, d'une part, et à permettre à chacun desdits terminaux bi-modes d'identifier d'autres stations de base du deuxième type, voisines de la station de base ayant émis le premier message d'information, d'autre part.

Selon une première variante d'un tel système de télécommunication, le premier message d'information est destiné à inclure une liste de stations de base du deuxième type, voisines de la station de base ayant émis le premier message d'information.

Selon une deuxième variante du système de télécommunication décrit plus haut, le premier message d'information est destiné à inclure un champ présentant un contenu de nature à indiquer à chaque terminal bi-mode qu'un deuxième message d'information est émis par la station de base ayant émis le premier message d'information, lequel deuxième message d'information est destiné à inclure une liste de stations de base du deuxième type voisines de ladite station de base ayant émis le premier message d'information.

Selon un mode de réalisation particulier d'un tel système de télécommunication, chaque terminal bi-mode étant muni de moyens de mesure de puissance de signaux émis par des stations de base voisines d'une station de base dite courante avec laquelle ledit terminal bi-mode est en communication à chaque instant, ledit terminal inclut des moyens de majoration des valeurs de puissance relatives à au moins un signal reçu depuis au moins l'une des stations de base du deuxième type voisines préalablement identifiées par ledit terminal bi-mode.

Selon un autre mode de réalisation particulier de l'invention, chaque station de base du deuxième type munie de moyens de diffusion d'un premier message d'information inclut en outre des moyens de diffusion d'un troisième message d'information, lequel troisième message d'information incluant un champ présentant un contenu de nature à indiquer à chaque terminal bi-mode ayant reçu ledit troisième message d'information si ledit terminal doit ou non tenir compte du premier message d'information.

L'invention concerne également, en tant que moyen utile à sa mise en oeuvre matérielle, un émetteur/récepteur d'ondes radioélectriques apte à remplir les fonctions d'une station de base du deuxième type dans un système de télécommunication conforme à la description qui précède.

L'invention concerne en outre, en tant qu'autre moyen utile à sa mise en oeuvre matérielle, un émetteur/récepteur d'ondes radioélectriques apte à remplir les fonctions d'un terminal bi-mode dans un système de télécommunication conforme à la description qui précède.

L'invention concerne également, en tant que produit résultant directement de sa mise en oeuvre, un signal radioélectrique destiné à véhiculer un premier, un deuxième ou un troisième message d'information conforme à la description qui précède.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma fonctionnel qui représente un système de télécommunication dans lequel l'invention est mise en oeuvre, et
La Fig.2 est un schéma fonctionnel qui représente un échange de signaux dans un tel système de télécommunication,
La Fig.3 est un schéma fonctionnel qui représente un autre échange de signaux dans un tel système de télécommunication

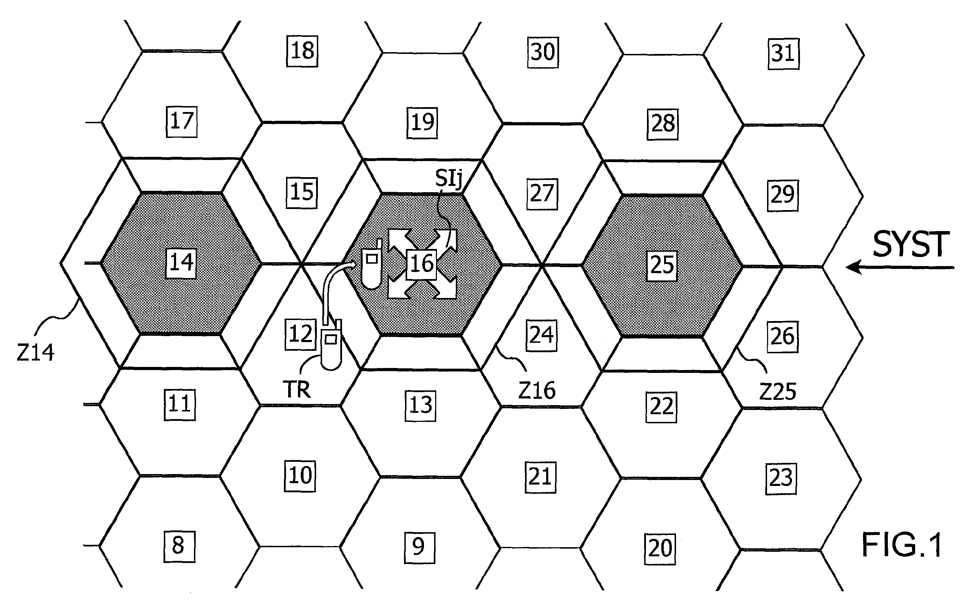

La Fig.1 représente schématiquement un système de télécommunication SYST incluant un premier réseau de communication cellulaire comprenant une pluralité de stations de base d'un premier type, numérotées 8 à 31. Ces stations de base desservent des zones géographiques appelées cellules qui ont ici été représentées sous une forme hexagonale purement théorique afin de permettre une compréhension aisée de l'exposé, les cellules présentant en général des contours très irréguliers en situation réelle. Le premier réseau de communication est, dans cet exemple, conforme au standard GSM.

Le système SYST inclut un deuxième réseau de communication cellulaire comprenant une autre pluralité de stations de base d'un deuxième type, numérotées 14, 16 et 25, lesquelles stations de base du deuxième type sont ici conformes au standard GSM, d'une part, ce qui leur permet de desservir des cellules du premier réseau de communication cellulaire et d'assurer ainsi qu'aucun trou n'existe dans la couverture géographique d'ensemble dudit premier réseau, les stations de base du deuxième type étant d'autre part munies de fonctionnalités ASCI (abréviation connue de l'homme du métier de l'expression anglaise "Advance Speech Call Items") en tant que permettant des appels de groupes de type VGCS (abréviation connue de l'homme du métier de l'expression anglaise "Voice Group Call Service") ou de type VBS (abréviation connue de l'homme du métier de l'expression anglaise "Voice Broadcast Service") respectivement définis dans des normes GSM 03.68 et 03.69. Lorsqu'elle mettra en oeuvre ces fonctionnalités ASCI, une telle station de base du deuxième type pourra utiliser pour ses communications une bande de fréquences distincte de celle utilisée selon la norme GSM par les stations de base du premier type, et pourra éventuellement mettre en oeuvre un cryptage de ses communications. Les stations de base du deuxième type 14, 16 et 25, bien qu'appartenant ici au premier réseau qui est par nature public, constituent en outre entre elles un ensemble formant un deuxième réseau qui est privé en tant que muni de fonctionnalités spécifiques auxquelles n'auront pas accès des terminaux GSM qui sont uniquement aptes à communiquer avec le premier réseau de communication.

Les stations de base du deuxième type 14, 16 et 25 sont ici alignées le long d'une direction horizontale dans le plan de la Figure, ce qui pourra par exemple être le cas si le deuxième réseau de communication est déployé le long d'une autoroute ou d'une voie ferrée, en vue d'offrir à des agents d'entretien de ladite autoroute ou de ladite voie ferrée un moyen privilégié de communication.

Afin d'assurer une continuité de service, les stations de base du deuxième type 14, 16 et 25 pourront, lorsqu'elles utiliseront les fonctionnalités ASCI qui les distinguent des stations de base du premier type, émettre des signaux de plus forte puissance que ceux qu'elles sont destinées à émettre lorsqu'elles émulent les stations de base du premier groupe, desservant alors des cellules référencées Z 14, Z16 et Z25 sur la présente Figure.

Ainsi, dans ce système de télécommunication SYST, les stations de base du deuxième type ne sont pas rassemblées en un ou plusieurs groupes inclus chacun dans une unique cellule desservie par une station de base du premier type, comme c'est le cas dans le système connu du document cité plus haut, mais sont au contraire dispersées parmi les stations de base incluses dans le premier réseau de communication, les stations de base des premier et deuxième types pouvant être destinées à être gérées par une même infrastructure non-représentée ici.

Un terminal bi-mode TR, apte à communiquer avec des stations de base du premier type et des stations de base du deuxième type, devra donc à tout moment être incité à se connecter ou à rester connecté avec une station de base du deuxième type.

A cet effet, les stations de base du deuxième type, par exemple ici la station 16, incluent des moyens de diffusion systématique d'un ou plusieurs messages d'information SIj destinés à tous les terminaux bi-modes présents dans la cellule desservie par ladite station de base, le nombre j pouvant prendre différentes valeurs selon le mode de mise en oeuvre de l'invention choisi. Ce ou ces messages d'information SIj sont compatibles avec le protocole de communication GSM dédié au réseau du premier type et sont destinés à informer chaque terminal bi-mode TR qu'un accès au deuxième réseau de communication lui est possible, d'une part, et à permettre à chaque terminal bi-mode TR d'identifier d'autres stations de base du deuxième type, ici les stations 14 et 25, voisines de la station de base 16 ayant émis le ou les messages d'information SIj, d'autre part.

Grâce à l'invention, ni les stations de base du deuxième type, ni par conséquent l'infrastructure qui en assure la gestion, n'ont besoin d'identifier un ou plusieurs terminaux bi-modes en tant que destinataires spécifiques des messages d'information SIj diffusés par lesdites stations de base. Parmi différents terminaux qui recevront ces messages d'information, seuls les terminaux bi-modes seront aptes à en extraire des informations utiles, ce qui permet d'attribuer aux terminaux eux-mêmes une grande partie des tâches dévolues à l'infrastructure dans le système connu du document cité plus haut.

Il convient d'observer ici que les stations de base du premier type, telle la station 12, pourront également, dans certains modes de mise en oeuvre de l'invention, être aptes à diffuser des messages d'informations semblables aux messages SIj dans le but d'avertir des terminaux bi-modes présents dans les zones géographiques qu'elles desservent, tel le terminal TR, que des stations de base du deuxième type, telles les stations 14 et 16, sont situées dans leur voisinage. Ceci permettra d'inciter ces terminaux bi-modes à surveiller prioritairement les stations voisines du deuxième type qui leur auront été ainsi signalées, en vue de favoriser une connexion de ces terminaux bi-modes au deuxième réseau de communication.

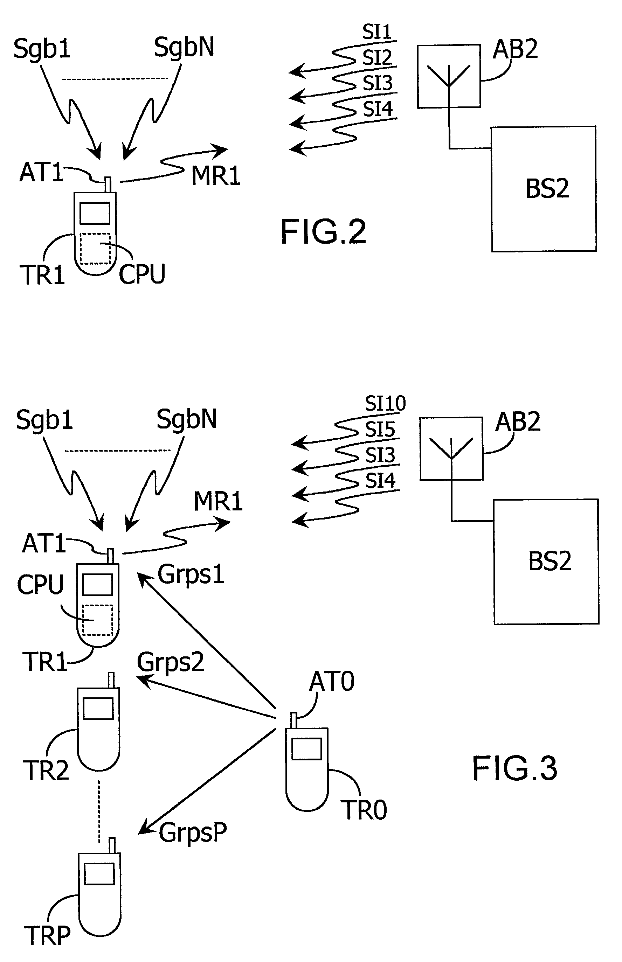

La Fig.2 illustre un échange de signaux qui pourra être établi entre une station de base du deuxième type BS2, par exemple la station 16 représentée dans la Figure précédente, et un terminal bi-mode TR1 dans un mode de mise en oeuvre particulier de l'invention.

Conformément à la description qui précède, la station de base BS2 est munie de moyens incluant une antenne AB2 pour diffuser un premier message d'information SI1 dont une lecture par le terminal bi-mode TR1 indiquera audit terminal qu'il peut se connecter au deuxième réseau de communication via la station de base BS2.

Le premier message d'information SI1 pourra par exemple être porté par un signal de type "System Information type 1", défini par la norme ETSI 04.08 et donc compatible avec le protocole GSM dédié au premier réseau de communication.

Dans certains modes de mise en oeuvre de l'invention, le premier message d'information SI1 pourra contenir suffisamment d'informations pour permettre au terminal TR1 d'identifier les stations de base du deuxième type auxquelles il devra se connecter de préférence, un tel premier message d'information SI1 contenant alors par lui-même des identifiants et/ou des valeurs de fréquence propres auxdites stations de base. Le premier message d'information SI1 pourra en outre inclure une liste de stations de base du premier type auxquelles le terminal bi-mode TR1 pourra être amené à se connecter dans des cas où aucune connexion n'est possible avec les stations de base du deuxième type indiquées dans la liste incluse dans un tel premier message d'information SI1.

De telles listes de stations de base peuvent cependant constituer un volume de données considérable, au point qu'il pourra être préférable de libérer le vecteur d'information constitué par le premier message d'information SI1 d'une telle charge, et de laisser ainsi ce vecteur apte à transmettre d'autres données.

Dans le mode de mise en oeuvre de l'invention décrit ici, le premier message d'information SI1 inclut un champ présentant un contenu de nature à indiquer au terminal bi-mode TR1 qu'un deuxième message d'information SI2 est émis par la station de base BS2, lequel deuxième message d'information SI2 incluant une liste de stations de base du deuxième type voisines de ladite station de base BS2.

Ceci permet de soulager le vecteur d'information constitué par le premier message d'information SI1 de la charge représentée par les listes de stations voisines, en prévoyant de diffuser ces listes au moyen d'un deuxième vecteur d'information constitué par le deuxième message d'information SI2, qui pourra par exemple être formé par un message de type "System Information type 2", également défini par la norme ETSI 04.08. Le premier message d'information SI1 ne contient alors qu'un drapeau dont la valeur indiquera au terminal TR1 qu'il doit examiner le contenu du deuxième message d'information SI2 pour en extraire la liste des stations de base voisines auxquelles il devra de préférence se connecter.

Le deuxième message d'information SI2 pourra par ailleurs ne contenir que des listes de stations de base du deuxième type, auquel cas des listes de stations de base voisines du premier type seront reçues par le terminal bi-mode TR1 selon la procédure usuelle définie dans la norme GSM.

Le terminal TR1 pourra scruter en permanence le contenu du premier message d'information SI1 lui parvenant depuis la station de base BS2, mais une telle scrutation permanente nécessitera une consommation de puissance continue qui risque d'épuiser prématurément une batterie constituant la source d'alimentation en énergie dudit terminal TR1. La station de base BS2 diffusera avantageusement un troisième message d'information SI3 incluant un drapeau de nature à indiquer au terminal TR1 s'il doit ou non tenir compte du premier message d'information SI1.

Ce troisième message d'information SI3 permet une activation ou une désactivation à distance des ressources dont dispose le terminal TR1 pour scruter le contenu du premier message d'information SI1, et donc de réduire la consommation d'énergie liée à la mise en oeuvre effective de ces ressources. Le troisième message d'information SI3 pourra par exemple être formé par un message de type "System Information type 3", défini par la norme ETSI 04.08. Le drapeau inclus dans le troisième message d'information SI3 pourra par exemple être codé sur plusieurs bits, et ordonner ainsi une prise en compte du seul premier message d'information SI1, ou une prise en compte combinée des premier et deuxième messages d'information SI1 et SI2.

Dans le mode de mise en oeuvre particulier de l'invention décrit ici, le terminal TR1 est destiné à produire des mesures de puissance de signaux Sgb1...SgbN émis par des stations de base voisines de sa station de base courante. A cet effet, le terminal TR1 est muni d'une unité de calcul CPU apte à analyser lesdits signaux Sgb1...SgbN qu'il aura préalablement reçus via une antenne AT1. Le terminal TR1 inclut en outre, également intégrés ici dans l'unité de calcul CPU, des moyens de majoration des valeurs de puissance relatives aux signaux reçus depuis les stations de base du deuxième type voisines, lesquelles auront été préalablement identifiées par ledit terminal TR1 grâce aux indications portées par les premier et/ou deuxième messages SI1 et/ou SI2.

Les valeurs de puissance mesurées par le terminal TR1 détermineront un classement par ordre de priorité qui sera attribué aux stations de base voisines pour une éventuelle connexion, que lesdites stations voisines soient du premier ou du deuxième type. Le terminal TR1 pourra envoyer à sa station de base courante un message de retour MR1 qui inclura simplement les valeurs mesurées, sans traitement supplémentaire hormis une éventuelle majoration conformément à l'exposé qui précède, et laisser l'infrastructure du système établir un classement sur la base des valeurs de puissance qu'elle aura ainsi reçues, et en déduire l'identité de la station de base à laquelle le terminal TR1 doit être incité à se connecter.

Le terminal TR1 peut cependant, grâce aux moyens de calcul CPU qu'il inclut, établir lui-même un tel classement et communiquer ce classement à sa station de base courante via le signal de retour MR1, et attendre de se voir indiquer sa future station de base courante. Le terminal TR1 pourra en outre déterminer par lui-même, sur la base du classement qu'il aura généré, l'identité de la station de base qui présente la plus forte valeur de puissance et se connecter ensuite par lui-même à cette station de base, accomplissant ainsi de façon autonome une opération de re-sélection de sa station de base courante.

La majoration des mesures relatives aux puissances des seuls signaux reçus depuis les stations de base du deuxième type permettra de faire artificiellement remonter dans les classements décrits ci-dessus les stations de base du deuxième type par rapport aux stations de base du premier type, et donc d'inciter le terminal bi-mode TR1 à se connecter ou à rester connecté au deuxième réseau de communication. La majoration prévue selon ce mode de mise en oeuvre de l'invention pourra être réalisée en ajoutant une même valeur prédéterminée à toutes les valeurs de puissances mesurées pour toutes les stations de base du deuxième type voisines, ou en ajoutant à chaque valeur de puissance mesurée pour chaque station de base du deuxième type voisine une valeur relative dépendant de ladite valeur de puissance mesurée, par exemple 25, 50 ou encore 100% de ladite valeur mesurée. Les valeurs à ajouter aux valeurs mesurées pourront être transmises au terminal TR1, sous forme absolue ou relative, au moyen d'un quatrième message d'information SI4 émis par la station de base BS2. Ce quatrième message d'information SI4 pourra par exemple être formé par un message de type "System Information type 4", défini par la norme ETSI 04.08.

La Fig.3 illustre un autre échange de signaux qui pourra être établi entre une station de base du deuxième type BS2, par exemple la station 16 représentée dans la Figure précédente, et un terminal bi-mode TR1 dans un autre mode de mise en oeuvre particulier de l'invention, selon lequel le terminal TR1, ainsi que d'autres terminaux bi-modes TR2...TRP forment un groupe de récepteurs de signaux Grps1...GrpsP, selon une technique d'appel de groupe de type VGCS (abréviation connue de l'homme du métier de l'expression anglaise "Voice Group Call Service") ou de type VBS (abréviation connue de l'homme du métier de l'expression anglaise "Voice Broadcast Service") respectivement définis dans des normes GSM 03.68 et 03.69. Dans une telle situation, les signaux Grps1...GrpsP seront en réalité émis vers les terminaux TR1...TRP, sur demande d'un unique terminal d'origine TR0, par la station de base BS2 desservant la zone géographique où se trouvent lesdits terminaux TR1...TRP, voire par d'autres stations de base du deuxième type si certains terminaux se trouvent dans d'autres cellules du deuxième réseau de communication. Les signaux Grps1...GrpsP auront ainsi pour origine un signal, non-représenté sur la présente Figure, transitant entre une antenne AT0 du terminal d'origine TR0 et l'antenne de la station de base desservant la zone géographique où se trouve ledit terminal d'origine TR0, par exemple l'antenne AT2 de la station de base BS2.

Les éléments qui sont communs avec des éléments de la Figure précédente portent des références identiques et ne seront pas à nouveau décrits ici.

Dans un tel mode de mise en oeuvre de l'invention, chaque terminal bi-mode TRk (pour k=0 à P) recevra un premier message d'information qui pourra être constitué par un message SI10 de type "System Information type 10", défini par la norme ETSI 04.08, le deuxième message d'information pouvant quant à lui être constitué par un message SI5 de type "System Information type 5", également défini par la norme ETSI 04.08. Un tel choix permet d'utiliser des vecteurs d'information prédéfinis, que des terminaux compatibles avec la norme précitée sont en mesure d'analyser, ce qui permettra d'implémenter l'invention sans pour autant nécessiter d'apporter de modifications significatives au terminaux bi-modes, aux stations de base du deuxième type ou à l'infrastructure destinée à gérer lesdites stations de base.

## Revendications

1. Procédé de transmission de données dans un système de télécommunication incluant :
. un premier réseau de communication cellulaire comprenant une pluralité de stations de base d'un premier type,
. un deuxième réseau de communication cellulaire comprenant une autre pluralité de stations de base d'un deuxième type, lesquels premier et deuxième types sont différentiables par des caractéristiques physiques non communes d'un type à l'autre, et
. au moins un terminal, dit bi-mode, apte à communiquer avec des stations de base du premier type et des stations de base du deuxième type,
procédé de transmission **caractérisé en ce qu'**il inclut une étape de diffusion, par au moins une station de base du deuxième type, d'au moins un premier message d'information destiné à tous les terminaux bi-modes présents dans une zone géographique desservie par ladite station de base, lequel premier message d'information étant compatible avec un protocole de communication dédié au premier réseau et étant destiné à informer chacun de ces terminaux bi-modes qu'un accès au deuxième réseau de communication leur est possible, d'une part, et à permettre à chacun desdits terminaux bi-modes d'identifier d'autres stations de base du deuxième type, voisines de la station de base ayant émis le premier message d'information, d'autre part.

2. Procédé de transmission selon la revendication 1, **caractérisé en ce que** le premier message d'information inclut une liste de stations de base du deuxième type, voisines de la station de base ayant émis le premier message d'information.

3. Procédé de transmission selon la revendication 1, **caractérisé en ce que** le premier message d'information inclut un champ présentant un contenu de nature à indiquer à chaque terminal bi-mode qu'un deuxième message d'information est émis par la station de base ayant émis le premier message d'information, lequel deuxième message d'information incluant une liste de stations de base du deuxième type voisines de ladite station de base ayant émis le premier message d'information.

4. Procédé de transmission selon l'une des revendications 1 à 3, **caractérisé en ce que**, chaque terminal bi-mode étant destiné à produire des mesures de puissance de signaux émis par des stations de base voisines d'une station de base dite courante avec laquelle ledit terminal bi-mode est en communication à chaque instant, ledit procédé inclut une étape de majoration des valeurs de puissance relatives à au moins un signal reçu depuis au moins l'une des stations de base du deuxième type voisines préalablement identifiées par ledit terminal bi-mode.

5. Procédé de transmission selon l'une des revendications 1 à 4, **caractérisé en ce qu'**il inclut en outre une étape de diffusion d'un troisième message d'information par une station de base du deuxième type destinée à diffuser un premier message d'information, lequel troisième message d'information incluant un champ présentant un contenu de nature à indiquer à chaque terminal bi-mode ayant reçu ledit troisième message d'information si ledit terminal doit ou non tenir compte du premier message d'information.

6. Système de télécommunication incluant :
. un premier réseau de communication cellulaire comprenant une pluralité de stations de base d'un premier type,
. un deuxième réseau de communication cellulaire comprenant une autre pluralité de stations de base d'un deuxième type, lesquels premier et deuxième types sont différentiables par des caractéristiques physiques non communes d'un type à l'autre, et
. au moins un terminal, dit bi-mode, apte à communiquer avec des stations de base du premier type et des stations de base du deuxième type,
système dans lequel au moins une station de base du deuxième type inclut des moyens de diffusion d'au moins un premier message d'information destiné à tous les terminaux bi-modes présents dans une zone géographique desservie par ladite station de base, lequel premier message d'information étant compatible avec un protocole de communication dédié au premier réseau et étant destiné à informer chacun de ces terminaux bi-modes qu'un accès au deuxième réseau de communication leur est possible, d'une part, et à permettre à chacun desdits terminaux bi-modes d'identifier d'autres stations de base du deuxième type, voisines de la station de base ayant émis le premier message d'information, d'autre part.

7. Système de télécommunication selon la revendication 6, **caractérisé en ce que** le premier message d'information est destiné à inclure une liste de stations de base du deuxième type, voisines de la station de base ayant émis le premier message d'information.

8. Système de télécommunication selon la revendication 6, **caractérisé en ce que** le premier message d'information est destiné à inclure un champ présentant un contenu de nature à indiquer à chaque terminal bi-mode qu'un deuxième message d'information est émis par la station de base ayant émis le premier message d'information, lequel deuxième message d'information est destiné à inclure une liste de stations de base du deuxième type voisines de ladite station de base ayant émis le premier message d'information.

9. Système de télécommunication selon l'une des revendications 6 à 8, **caractérisé en ce que**, chaque terminal bi-mode étant muni de moyens de mesure de puissance de signaux émis par des stations de base voisines d'une station de base dite courante avec laquelle ledit terminal bi-mode est en communication à chaque instant, ledit terminal inclut des moyens de majoration des valeurs de puissance relatives à au moins un signal reçu depuis au moins l'une des stations de base du deuxième type voisines préalablement identifiées par ledit terminal bi-mode.

10. Système de télécommunication selon l'une des revendications 6 à 9, **caractérisé en ce que** chaque station de base du deuxième type munie de moyens de diffusion d'un premier message d'information inclut en outre des moyens de diffusion d'un troisième message d'information, lequel troisième message d'information incluant un champ présentant un contenu de nature à indiquer à chaque terminal bi-mode ayant reçu ledit troisième message d'information si ledit terminal doit ou non tenir compte du premier message d'information.

11. Emetteur/récepteur d'ondes radioélectriques apte à remplir les fonctions d'une station de base du deuxième type dans un système de télécommunication conforme à l'une des revendications 6 à 10.

12. Emetteur/récepteur d'ondes radioélectriques apte à remplir les fonctions d'un terminal bi-mode dans un système de télécommunication conforme à l'une des revendications 6 à 10.

13. Signal radioélectrique destiné à véhiculer un message d'information lors de la mise en oeuvre d'un procédé conforme à l'une des revendications 1 à 5.
